# EUROPEAN PATENT APPLICATION

(11) **EP 4 728 845 A1**
(43) Date of publication of application: **22.04.2026**
(21) Application number: 25209925.4
(22) Date of filing: 20.10.2025
(51) Int. Cl.: A01B 69/04

(54) **SETTING METHOD, SETTING PROGRAM, SETTING SYSTEM, AND AUTOMATIC TRAVEL METHOD**

(30) Priority: 21.10.2024 JP 2024184839
(71) Applicant: Yanmar Holdings Co., Ltd., Osaka-shi, Osaka (JP)
(72) Inventor: NISHII, Yasuto, Okayama-shi (JP); MURAYAMA, Masaaki, Okayama-shi (JP); MIYAKE, Koji, Okayama-shi (JP); TAKAHASHI, Mamoru, Okayama-shi (JP)
(74) Representative: Sekiguchi, Kazuya

(57) **Abstract**

[Problem] To provide a setting method, a setting program, a setting system, and an automatic travel method capable of improving work efficiency of work performed by a work vehicle that travels automatically on a field.

[Solution] A setting processing unit 211 sets information used for causing a work vehicle 10 to travel automatically on a field. The setting processing unit 211 sets whether or not to allow part of the work vehicle 10 to protrude outside the field when the work vehicle 10 travels automatically on the field.

## Description

### TECHNICAL FIELD

The present invention relates to a technique for causing a work vehicle to travel automatically on a field.

### BACKGROUND ART

There has been known a conventional technique for generating an automatic travel route (target route) such that a work vehicle does not protrude outside a field, when the work vehicle is caused to travel automatically on the field. For example, there has been known a system in which a predetermined safety margin is provided on an inner side of an outer edge (boundary) of a field and a target route is generated on an inner side relative to the safety margin.

### PRIOR ART DOCUMENT

### PATENT DOCUMENT

Patent Document 1: JP-A-2021-129554

### SUMMARY OF INVENTION

### TECHNICAL PROBLEM

However, when the target route is set while unexceptionally prohibiting the work vehicle from protruding outside the field, there arises such a problem that a work range is narrowed, thereby reducing work efficiency.

The present invention is intended to provide a setting method, a setting program, a setting system, and an automatic travel method capable of improving work efficiency of work performed by a work vehicle that travels automatically on a field.

### SOLUTION TO PROBLEM

A setting method according to the present invention is a method for setting information used for causing a work vehicle to travel automatically on a field, the method including: setting whether or not to allow part of the work vehicle to protrude outside the field when the work vehicle travels automatically on the field.

A setting program according to the present invention is a program for setting information used for causing a work vehicle to travel automatically on a field, the program being configured to cause one or more processors to perform: setting whether or not to allow part of the work vehicle to protrude outside the field when the work vehicle travels automatically on the field.

A setting system according to the present invention is a system for setting information used for causing a work vehicle to travel automatically on a field, the system being configured to set whether or not to allow part of the work vehicle to protrude outside the field when the work vehicle travels automatically on the field.

An automatic travel method according to the present invention is a method for causing a work vehicle to travel automatically on a field, the method including: setting whether or not to allow part of the work vehicle to perform protrusion outside the field when the work vehicle travels automatically on the field; and causing the work vehicle to travel automatically in accordance with setting content related to the protrusion of the work vehicle outside the field.

### ADVANTAGEOUS EFFECTS OF INVENTION

According to the present invention, it is possible to provide a setting method, a setting program, a setting system, and an automatic travel method capable of improving work efficiency of work performed by a work vehicle that travels automatically on a field.

### BRIEF DESCRIPTION OF DRAWINGS

Fig. 1 is a diagram showing a configuration of an automatic travel system according to an embodiment of the present invention;
Fig. 2 is an external view showing an example of a work vehicle according to the embodiment of the present invention;
Fig. 3 is a diagram showing an example of a target route of one work vehicle according to the embodiment of the present invention;
Fig. 4 is a diagram showing an example of a target route of another work vehicle according to the embodiment of the present invention;
Fig. 5 is a diagram showing an example of a menu screen displayed on an operation terminal according to the embodiment of the present invention;
Fig. 6 is a diagram showing an example of a registration screen displayed on the operation terminal according to the embodiment of the present invention;
Fig. 7 is a diagram showing an example of a work plan list displayed on the operation terminal according to the embodiment of the present invention;
Fig. 8 is a diagram showing a route generation screen displayed on the operation terminal according to the embodiment of the present invention;
Fig. 9 is a diagram showing a registration confirmation screen displayed on the operation terminal according to the embodiment of the present invention;
Fig. 10 is a diagram showing a registration confirmation screen displayed on the operation terminal according to the embodiment of the present invention;
Fig. 11 is a diagram showing a protrusion setting screen displayed on the operation terminal according to the embodiment of the present invention;
Fig. 12 is a diagram showing a registration confirmation screen displayed on the operation terminal according to the embodiment of the present invention;
Fig. 13 is a diagram showing a protrusion setting screen displayed on the operation terminal according to the embodiment of the present invention;
Fig. 14A is a diagram showing a size of a work machine according to the embodiment of the present invention;
Fig. 14B is a diagram showing a size of the work machine according to the embodiment of the present invention;
Fig. 15A is a diagram showing a route generation result screen displayed on the operation terminal according to the embodiment of the present invention;
Fig. 15B is a diagram showing a route generation result screen displayed on the operation terminal according to the embodiment of the present invention;
Fig. 16A is a diagram showing a route generation result screen displayed on the operation terminal according to the embodiment of the present invention;
Fig. 16B is a diagram showing a route generation result screen displayed on the operation terminal according to the embodiment of the present invention;
Fig. 17 is a flowchart showing an example of a procedure of setting processing performed by the automatic travel system according to the embodiment of the present invention;
Fig. 18A is a diagram showing a registration confirmation screen displayed on an operation terminal according to another embodiment of the present invention;
Fig. 18B is a diagram showing a registration confirmation screen displayed on the operation terminal according to the other embodiment of the present invention;
Fig. 19A is a diagram showing a specific example of a method of changing a work range in accordance with change in a headland width, according to another embodiment of the present invention; and
Fig. 19B is a diagram showing a specific example of the method of changing the work range in accordance with the change in the headland width, according to the other embodiment of the present invention.

### DESCRIPTION OF EMBODIMENTS

The following embodiments are examples that embody the present invention, and are not intended to limit the technical scope of the present invention.

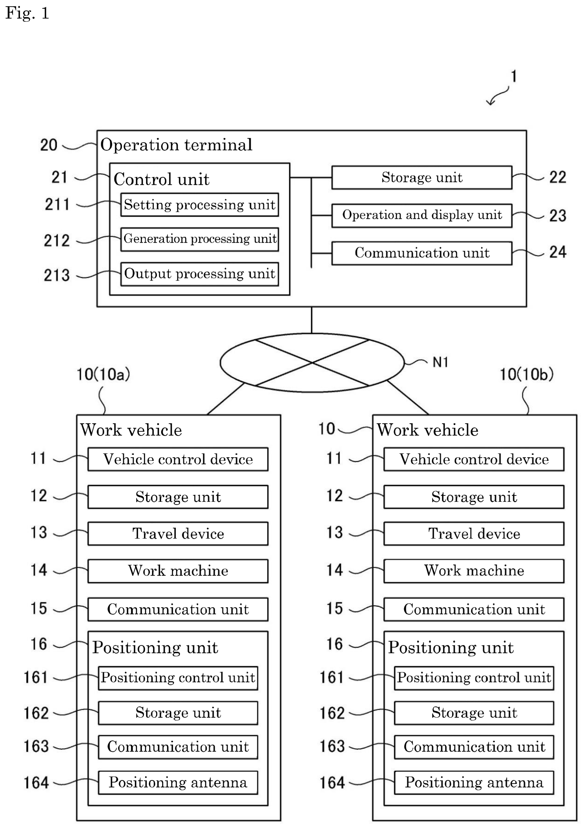

As shown in Fig. 1, an automatic travel system 1 according to an embodiment of the present invention includes work vehicles 10 and an operation terminal 20. Moreover, the automatic travel system 1 includes the plurality of work vehicles 10. Each of the work vehicles 10 and the operation terminal 20 can communicate with each other via a communication network N1. For example, each of the work vehicles 10 and the operation terminal 20 can communicate via a mobile phone line network, a packet line network, or a wireless LAN. Note that in the present embodiment, the operation terminal 20 is a device that sets and manages work information related to the plurality of work vehicles 10, and may include, for example, a management device, a server device, a cloud server, or the like. In addition, as another embodiment, the operation terminal 20 may be arranged for each of the work vehicles 10, and one operation terminal 20 may be configured to be able to operate one work vehicle 10.

In the present embodiment, a case will be described, as an example, in which the work vehicle 10 is a tractor. Note that, as another embodiment, the work vehicle 10 may be a rice transplanter, a combine harvester, a construction machine, a snowplow, or the like. The work vehicle 10 has a configuration capable of traveling automatically (traveling autonomously) in a field, which is a work region, along a preset target route. In addition, the work vehicle 10 can perform predetermined work while traveling automatically, in the field. For example, each of the work vehicles 10 performs predetermined work while traveling automatically along a preset target route in the field, on the basis of position information on a current position of the work vehicle 10 measured by a positioning unit 16.

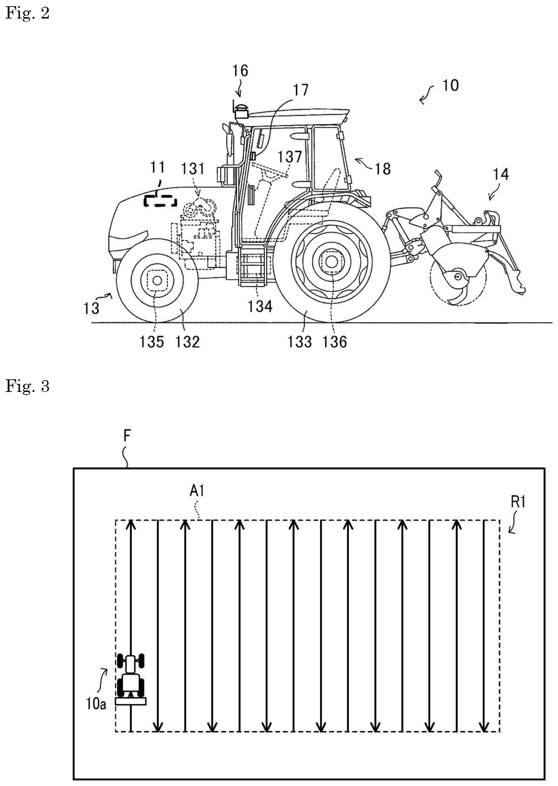

For example, a work vehicle 10a performs work while traveling automatically along a preset target route R1, in a field F shown in Fig. 3. A work machine 14 (for example, a plowing machine) is attached to the work vehicle 10a. The target route R1 includes linear work routes arranged as a plurality of lines and non-work routes (turning routes) (not shown) connecting the work routes. Note that at least part of the plurality of work routes may be curved routes. The work vehicle 10a performs plowing work while traveling reciprocatingly on the field F from one side (left side in Fig. 3) to the other side (right side in Fig. 3), along the target route R1. In Fig. 3, a work range (plowing range) of the work vehicle 10a is denoted by reference sign A1.

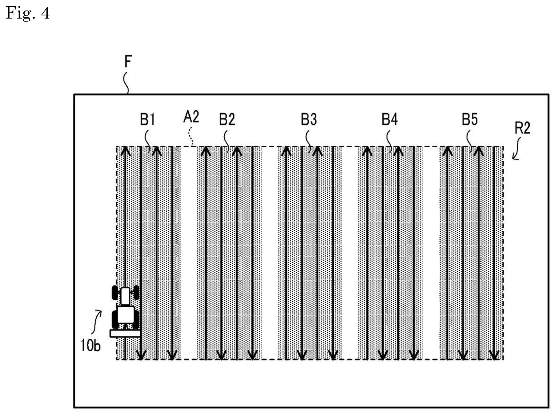

In addition, for example, as shown in Fig. 4, a work vehicle 10b performs work while traveling automatically along a preset target route R2, in the same field F. For example, a work machine 14 (tiller) is attached to the work vehicle 10b. The work vehicle 10b tills a region (work range A1) (see Fig. 3) that the work vehicle 10a has plowed. Note that in the example shown in Fig. 4, a work range A2 of the work vehicle 10b is divided into a plurality of work blocks B1 to B5 by positions (pest control paths (inter-block routes)) where the work vehicle 10 travels in pest control work. That is, the work blocks B1 to B5 are regions divided by the pest control paths.

The target route R2 includes linear work routes arranged as a plurality of lines and non-work routes (turning routes) (not shown) connecting the work routes. Note that at least part of the plurality of work routes may be curved routes. The work vehicle 10b performs tilling work while traveling reciprocatingly on the field F from one side (left side in Fig. 4) to the other side (right side in Fig. 4), along the target route R2. In Fig. 4, a work range (tilling range) of the work vehicle 10b is denoted by reference sign A2.

In this manner, the work vehicle 10a and the work vehicle 10b work in cooperation in the same field F. For example, the work vehicle 10a performs work (plowing work) in advance, and the work vehicle 10b performs work (tilling work) after the work of the work vehicle 10a. The work content of each of the work vehicles 10 is not limited. For example, the work vehicle 10a may perform tilling work in advance, and the work vehicle 10b may perform ridging work after the work of the work vehicle 10a. In addition, for example, the work vehicle 10a may perform ridging work and planting work in advance, and the work vehicle 10b may perform weeding work and pest control work after the work of the work vehicle 10a.

Here, as a conventional technique, a technique has been known in which a predetermined safety margin is provided on an inner side of an outer edge (boundary) of a field, and in which a target route is generated on an inner side relative to the safety margin and a work vehicle is caused to travel automatically thereon and work. However, when the target route is set while unexceptionally prohibiting the work vehicle from protruding outside the field, there arises such a problem that the work range is narrowed due to necessity of an allocation of a turning region in a non-work region (headland), thereby reducing work efficiency. On the other hand, the automatic travel system 1 according to the present embodiment has a configuration capable of improving work efficiency of work performed by a work vehicle that travels automatically on a field as described below. In particular, the automatic travel system 1 has a configuration capable of setting whether or not to allow part of the work vehicle to protrude outside the field when the work vehicle travels automatically on the field.

Note that the automatic travel system 1 may include three or more work vehicles 10. For example, a work vehicle 10c is equipped with a ridger, and performs work (ridging work) of forming a ridge in a region tilled by the work vehicle 10b. In addition, for example, a work vehicle 10d is equipped with a planting machine, and performs work (planting work) of planting plants in a region where the work vehicle 10c has formed a ridge. Further, for example, a work vehicle 10e is equipped with a pest control machine, and performs pest control work such as spraying an agricultural chemical on plants planted by the work vehicle 10d. In addition, the automatic travel system 1 may include a plurality of work vehicles 10 that perform respective various types of work including inversion, weeding, and harvesting.

### [Work vehicle 10]

As shown in Figs. 1 and 2, the work vehicle 10 includes a vehicle control device 11, a storage unit 12, a travel device 13, the work machine 14, a communication unit 15, the positioning unit 16, and the like. The vehicle control device 11 is electrically connected to the storage unit 12, the travel device 13, the work machine 14, the positioning unit 16, and the like. Note that the vehicle control device 11 and the positioning unit 16 may be capable of wireless communication. Note that the term "work vehicle 10" is used when any common configuration between the work vehicle 10a and the work vehicle 10b is described.

The communication unit 15 is a communication interface via which the work vehicle 10 is connected with the communication network N1 in a wired or wireless manner, and through which data communication according to a predetermined communication protocol is performed with external equipment such as the operation terminal 20 via the communication network N1. The work vehicle 10 can wirelessly communicate with each operation terminal 20 via the communication unit 15.

The storage unit 12 is a non-volatile storage unit such as a hard disk drive (HDD), a solid state drive (SSD), or a flash memory that stores various types of information. The storage unit 12 stores a control program such as an automatic travel program for causing the vehicle control device 11 to perform automatic travel processing. For example, the automatic travel program is non-temporarily recorded in a computer-readable recording medium such as a flash ROM, an EEPROM, a CD, or a DVD, and is read by a predetermined reading device (not shown) and stored in the storage unit 12. Note that the automatic travel program may be downloaded from a server (not shown) to the work vehicle 10 via the communication network N1 and stored in the storage unit 12. In addition, the storage unit 12 may store route data of a target route generated in the operation terminal 20.

The travel device 13 is a drive unit that causes the work vehicle 10 to travel. As shown in Fig. 2, the travel device 13 includes an engine 131 (drive source), front wheels 132, rear wheels 133, a transmission 134, a front axle 135, a rear axle 136, a steering wheel 137, and the like. Note that the front wheels 132 and the rear wheels 133 are provided on the left and right of the work vehicle 10. In addition, the travel device 13 is not limited to a wheel type including the front wheel 132 and the rear wheel 133, and may be a crawler type including crawlers provided on the left and right of the work vehicle 10.

The engine 131 is a drive source such as a diesel engine or a gasoline engine driven using fuel supplied to a fuel tank (not shown). The travel device 13 may include an electric motor as a drive source together with the engine 131 or instead of the engine 131. Note that a generator (not shown) is connected to the engine 131, and electric power is supplied from the generator to electric components such as the vehicle control device 11 and the like, a battery, and the like provided in the work vehicle 10. Note that the battery is charged with electric power supplied from the generator. Moreover, electric components such as the vehicle control device 11 and the positioning unit 16 provided in the work vehicle 10 can be driven with electric power supplied from the battery even after the engine 131 is stopped.

A driving force of the engine 131 is transmitted to the front wheels 132 via the transmission 134 and the front axle 135, and is transmitted to the rear wheels 133 via the transmission 134 and the rear axle 136. In addition, a driving force of the engine 131 is also transmitted to the work machine 14 via a PTO shaft (not shown). When the work vehicle 10 performs automatic travel, the travel device 13 performs a travel operation according to a command from the vehicle control device 11.

The work machine 14 is, for example, a plowing machine, an inversion machine, a tiller, a ridger, a weeding machine, a pest control machine, or the like, and is attachable to or detachable from the work vehicle 10. Thus, the work vehicle 10 can perform various types of work by using any of the work machines 14. Fig. 2 shows a case in which the work machine 14 is a tiller.

The steering wheel 137 is an operation unit operated by an operator or the vehicle control device 11. For example, in the travel device 13, an angle of the front wheel 132 is changed by a hydraulic power steering mechanism (not shown) or the like in accordance with an operation of the steering wheel 137 by the vehicle control device 11, and a travel direction of the work vehicle 10 is changed. When the operator performs a teaching operation, for example, the operator operates the steering wheel 137 to cause the work vehicle 10 to travel manually.

In addition to the steering wheel 137, the travel device 13 includes a shift lever, an accelerator, a brake, and the like (not shown) operated by the vehicle control device 11. Moreover, in the travel device 13, a gear of the transmission 134 is switched to a forward gear, a reverse gear, or the like in accordance with an operation of the shift lever by the vehicle control device 11, and a travel mode of the work vehicle 10 is switched to forward movement, backward movement, or the like. In addition, the vehicle control device 11 operates the accelerator to control a rotation speed of the engine 131. Further, the vehicle control device 11 operates the brake to brake rotation of the front wheels 132 and the rear wheels 133 by using an electromagnetic brake.

The positioning unit 16 is a communication device including a positioning control unit 161, a storage unit 162, a communication unit 163, a positioning antenna 164, and the like. For example, as shown in Fig. 2, the positioning unit 16 is provided on an upper part of a cabin 18 in which the operator rides. In addition, the positioning unit 16 is not necessarily installed in the cabin 18. Further, the positioning control unit 161, the storage unit 162, the communication unit 163, and the positioning antenna 164 of the positioning unit 16 may be separately arranged at different positions in the work vehicle 10. Note that as described above, the battery is connected to the positioning unit 16, and the positioning unit 16 can operate even while the engine 131 is stopped. In addition, for the positioning unit 16, for example, a mobile phone terminal, a smartphone, a tablet terminal, a quantum compass, or the like may be substituted.

The positioning control unit 161 is a computer system including one or more processors and storage memories such as a non-volatile memory and a RAM. The storage unit 162 is a non-volatile memory or the like that stores a program for causing the positioning control unit 161 to perform positioning processing, and data such as positioning information and movement information. For example, the program is non-temporarily recorded in a computer-readable recording medium such as a flash ROM, an EEPROM, a CD, or a DVD, and is read by a predetermined reading device (not shown) and stored in the storage unit 162. Note that the program may be downloaded from a server (not shown) to the positioning unit 16 via the communication network N1 and stored in the storage unit 162.

The communication unit 163 is a communication interface via which the positioning unit 16 is connected with the communication network N1 in a wired or wireless manner, and through which data communication according to a predetermined communication protocol is performed with external equipment such as a base station (not shown) via the communication network N1.

The positioning antenna 164 is an antenna that receives a radio wave (GNSS signal) transmitted from a satellite.

The positioning control unit 161 calculates a current position of the work vehicle 10 on the basis of the GNSS signal received by the positioning antenna 164 from the satellite. For example, in a case where the work vehicle 10 travels automatically on the field F, when the positioning antenna 164 receives a radio wave (transmission time, orbital information, or the like) transmitted from each of a plurality of satellites, the positioning control unit 161 calculates a distance between the positioning antenna 164 and each satellite, and calculates the current position (latitude and longitude) of the work vehicle 10 on the basis of the calculated distance. In addition, the positioning control unit 161 may measure the position by using a real-time kinematic method (RTK-GNSS positioning method (RTK method)) in which the current position of the work vehicle 10 is calculated using correction information corresponding to a base station (reference station) near the work vehicle 10. In such a manner, the work vehicle 10 performs automatic travel by using positioning information obtained by the RTK method. Note that the current position of the work vehicle 10 may be the same position as a positioning position (for example, a position of the positioning antenna 164), or may be a position shifted from the positioning position. Note that the positioning control unit 161 may calculate (measure) the current position of the work vehicle 10 by using a quantum compass.

The vehicle control device 11 includes control devices such as a CPU, a ROM, and a RAM. The CPU is a processor that performs various types of calculation processing. The ROM is a non-volatile storage unit in which control programs such as a BIOS and an OS for causing the CPU to perform various types of calculation processing are stored in advance. The RAM is a volatile or non-volatile storage unit that stores various types of information, and is used as a temporary storage memory (work area) for various types of processing performed by the CPU. Moreover, the vehicle control device 11 controls the work vehicle 10 by executing, with the CPU, various control programs stored in advance in the ROM or the storage unit 12.

The vehicle control device 11 controls the operation of the work vehicle 10 in response to various user operations on the work vehicle 10. In addition, the vehicle control device 11 performs automatic travel processing for the work vehicle 10, on the basis of the current position of the work vehicle 10 calculated by the positioning unit 16 and a preset target route.

The vehicle control device 11 functions as the various processing units by performing, with the CPU, various types of processing according to the automatic travel program. In addition, some or all of the processing units may include an electronic circuit. Note that the automatic travel program may be a program for causing a plurality of processors to function as the processing unit.

Specifically, when the vehicle control device 11 acquires a travel start instruction from the operation terminal 20, the vehicle control device 11 starts automatic travel of the work vehicle 10. For example, when the operator presses a start button on an operation screen of the operation terminal 20, the operation terminal 20 outputs the travel start instruction to the work vehicle 10. When the vehicle control device 11 acquires the travel start instruction from the operation terminal 20, the vehicle control device 11 starts automatic travel of the work vehicle 10 in accordance with the target route. As a result, for example, the work vehicle 10a starts automatic travel along the target route R1 (see Fig. 3) in the field F, and performs work (for example, plowing work) with the work machine 14. In addition, the work vehicle 10b starts automatic travel along the target route R2 (see Fig. 4) in the field F, and performs work (for example, tilling work) with the work machine 14. Note that the work vehicle 10b may start automatic travel at a predetermined timing after the work vehicle 10a starts automatic travel in response to the travel start instruction from the operator. That is, in the automatic travel system 1, during a time between the start and the end of first work performed by one work vehicle 10, another work vehicle 10 may start second work on a worked region of the first work. A work start timing may be set in advance for each of a plurality of types of work included in a work plan.

Note that the target route R1 along which the work vehicle 10a travels automatically and the target route R2 along which the work vehicle 10b travels automatically are generated in the operation terminal 20, for example. In addition, each target route includes a work route within a work range and a movement route (including a turning route) in a non-work region (headland). The work vehicle 10a acquires route data corresponding to the target route R1 from the operation terminal 20 and travels automatically along the target route R1, and the work vehicle 10b acquires route data corresponding to the target route R2 from the operation terminal 20 and travels automatically along the target route R2.

In addition, when the vehicle control device 11 acquires a travel stop instruction from the operation terminal 20, the vehicle control device 11 stops automatic travel of the work vehicle 10. For example, when the operator presses a stop button on the operation screen of the operation terminal 20, the operation terminal 20 outputs the travel stop instruction to the work vehicle 10.

### [Operation terminal 20]

As shown in Fig. 1, the operation terminal 20 is an information processing device including a control unit 21, a storage unit 22, an operation and display unit 23, a communication unit 24, and the like. The operation terminal 20 may include a portable terminal such as a tablet terminal or a smartphone.

The communication unit 24 is a communication interface via which the operation terminal 20 is connected with the communication network N1 in a wired or wireless manner, and through which data communication according to a predetermined communication protocol is performed with external equipment such as a plurality of work vehicles 10 via the communication network N1.

The operation and display unit 23 is a user interface including a display unit such as a liquid crystal display or an organic EL display that displays various types of information, and an operation unit such as a touch panel, a mouse, or a keyboard that receives an operation. The operator (user) can perform an operation of registering various types of information (later-described work vehicle information, field information, work information, or the like) by operating the operation unit on the operation screen displayed on the display unit. In addition, the operator can operate the operation unit to provide the travel start instruction, the travel stop instruction, or the like to the work vehicle 10. Further, the operator can grasp a travel state of the work vehicle 10 traveling automatically along the target route on the field F on the basis of a travel track displayed on the operation terminal 20, at a place away from the work vehicle 10.

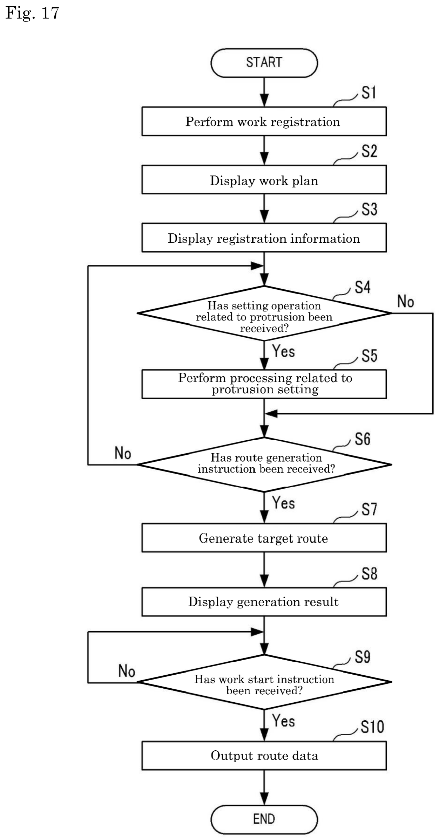

The storage unit 22 is a non-volatile storage unit such as an HDD, an SSD, or a flash memory that stores various types of information. The storage unit 22 stores a control program such as a setting program for causing the control unit 21 to perform setting processing (see Fig. 17) to be described later. For example, the setting program is non-temporarily recorded in a computer-readable recording medium such as a CD or a DVD, and is read by a reading device (not shown) such as a CD drive or a DVD drive included in the operation terminal 20 and is stored in the storage unit 22. Note that the setting program may be downloaded from a server (not shown) to the operation terminal 20 via the communication network N1 and stored in the storage unit 22.

In addition, a dedicated application for causing the work vehicle 10 to travel automatically is installed in the storage unit 22. The control unit 21 launches the dedicated application to perform setting processing on various types of information related to the work vehicle 10, generation processing of a target route of the work vehicle 10, provision of an automatic travel instruction to the work vehicle 10, or the like.

As shown in Fig. 1, the control unit 21 includes various processing units such as a setting processing unit 211, a generation processing unit 212, and an output processing unit 213. Note that the control unit 21 functions as the various processing units by performing, with the CPU, various types of processing according to the setting program. In addition, some or all of the processing units may include an electronic circuit. Note that the setting program may be a program for causing a plurality of processors to function as the processing unit.

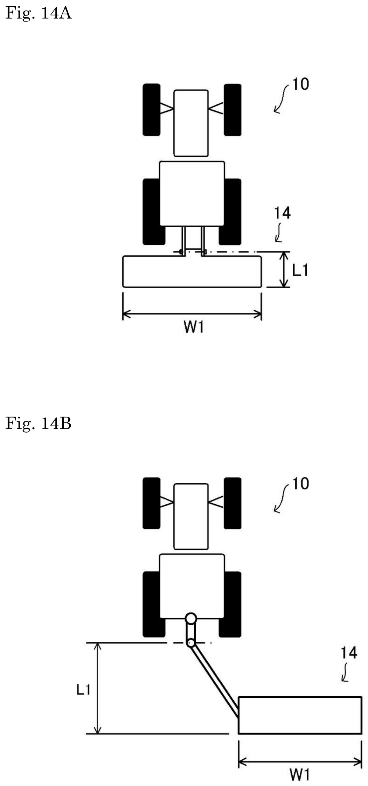

The setting processing unit 211 sets information related to the work vehicle 10 (hereinafter referred to as work vehicle information). Specifically, the setting processing unit 211 sets, when the operator performs a registration operation on the operation terminal 20, information such as a model of the work vehicle 10, a position at which the positioning antenna 164 is attached in the work vehicle 10, a type of the work machine 14, a size (see Figs. 14A and 14B described later) and a shape of the work machine 14, a position of the work machine 14 with respect to the work vehicle 10, a vehicle speed and an engine rotation speed during work of the work vehicle 10, or a vehicle speed and an engine rotation speed during turning of the work vehicle 10.

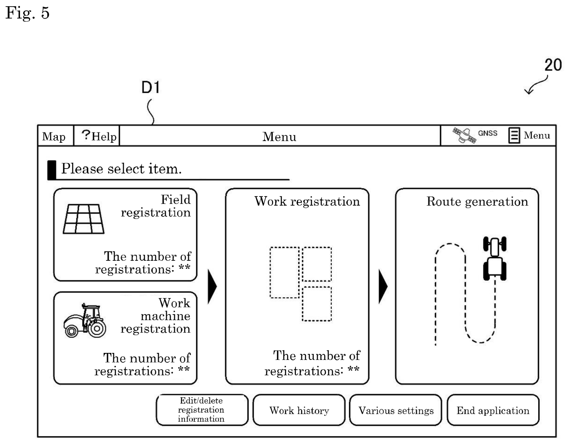

For example, the operator selects "work machine registration" on a menu screen D1 shown in Fig. 5, and registers a type of the work machine (a tiller, a ridger, a pest control machine, or the like) and information on the work machine (work width, overlapping width, or the like) on a registration screen (not shown). Here, the operator repeats a registration operation for the work machine registration a plurality of times, according to the work plan. For example, the registration operation for the work machine registration is performed for each type of work of plowing, inversion, tilling, ridging, planting, weeding, pest control, and harvesting, according to a cultivation plan for a crop.

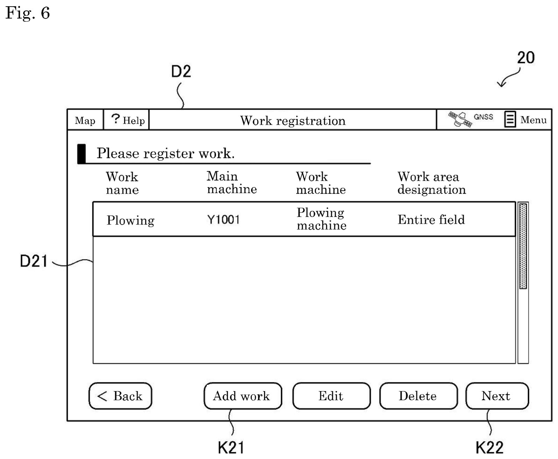

Subsequently, the operator selects "work registration" on the menu screen D1 shown in Fig. 5, and registers a plurality of types of work included in the work plan on a registration screen D2 (see Fig. 6). For example, the operator presses a work addition button K21 on the registration screen D2 of Fig. 6 and selects a work machine in accordance with the work plan from a plurality of work machines registered in advance, and the operator registers work information such as a work area, a work method for a headland, driverless travel/human-operated travel, a turning method, a vehicle speed, and an engine rotation speed. Note that the work area is a setting item related to a region where work is to be performed in the field F, and the operator selects any one of "work with selection of a cropping type and pest control paths", "work with selection of a cropping type", and "work in the entire field". Note that, for example, in tilling work, the operator may be able to select either "work with selection of a cropping type and pest control paths" or "work with selection of pest control paths". For example, when the operator desires to perform tilling immediately before ridging or planting, the operator selects "work with selection of a cropping type and pest control paths" to set a cropping type and pest control paths in the work area. In addition, for example, when the operator desires to perform tilling on pest control paths, the operator selects "work with selection of pest control paths" to set pest control paths in the work area. The setting processing unit 211 causes the work information registered by the operator to be displayed in a work plan list D21. Specifically, the setting processing unit 211 causes work content, identification information (name, model number, or the like) of the work vehicle 10 (main machine) and the work machine 14, and a work area to be displayed in the form of a list for each type of work, on a setting screen for setting the work plan.

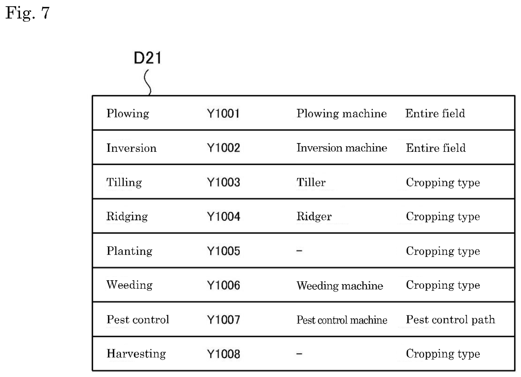

Fig. 6 shows a state in which work information related to work of "plowing" is registered. In a case where the operator creates a work plan (for example, a crop cultivation plan), the operator presses the work addition button K21 on the registration screen D2, and registers work information on each type of work of plowing, inversion, tilling, ridging, planting, weeding, pest control, and harvesting. Fig. 7 shows a work plan list D21 in which work information on each type of work is registered. In such a manner, the setting processing unit 211 registers first work corresponding to a first work vehicle 10 that travels automatically in a first work range in the field F, and registers second work corresponding to a second work vehicle 10 that travels automatically in a second work range in the field F.

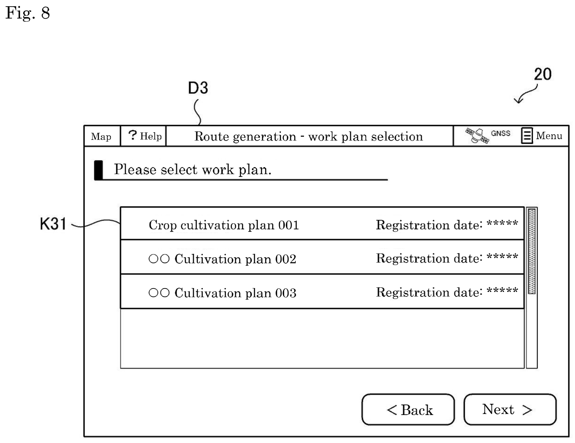

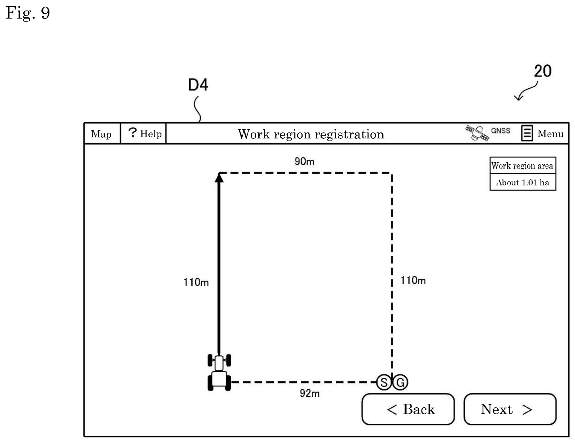

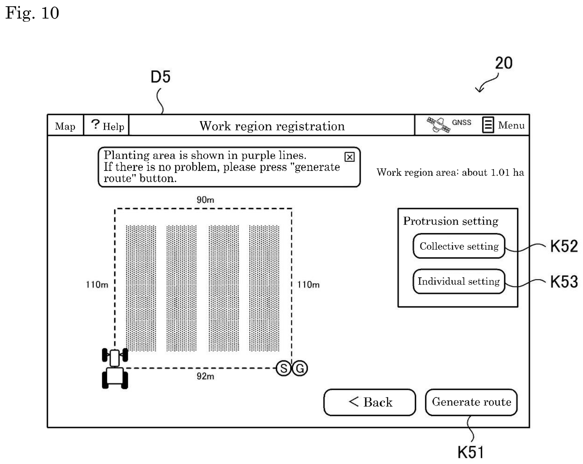

Subsequently, the operator selects "route generation" on the menu screen D1 shown in Fig. 5 and sets a target route corresponding to each of the plurality of types of work included in the work plan, on a route generation screen D3 and the like (see Fig. 8 and the like). For example, on the route generation screen D3 of Fig. 8, the operator selects a work plan (here, "crop cultivation plan") of a work target from a work plan selection screen K31. Thereafter, on a registration screen (not shown), the operator selects a work target field, designates a work region, sets a work direction, sets a work start position and a work end position, sets work content (for example, pest control paths, ridge spacing, the number of ridges, and the like), and performs other operations. The setting processing unit 211 causes a registration confirmation screen D4 (see Fig. 9) to be displayed after each piece of setting information is registered. On the registration confirmation screen D4, the lengths of outer edges of the work region (field) are displayed. When the operator confirms the registration confirmation screen D4 and presses "next", the setting processing unit 211 causes a registration confirmation screen D5 shown in Fig. 10 to be displayed. The setting processing unit 211 causes a work range (for example, a planting area) to be displayed and causes a route generation button K51 to be displayed, on the registration confirmation screen D5. In a case where the operator determines that there is no problem with the set work range, the operator presses the route generation button K51 for accepting an instruction to generate a target route.

### [Protrusion setting]

Further, the setting processing unit 211 can set whether or not to allow part of the work vehicle 10 to protrude (stick out) to an outside (outside of the field) from a boundary (outer edge) of the field F when the work vehicle 10 travels automatically on the field F. The "part of the work vehicle 10" includes front part, rear part, or side part of a vehicle body of the work vehicle 10, or front part, rear part, or side part of the work machine 14.

Specifically, the setting processing unit 211 causes selection as to whether to allow or not to allow (prohibit) protrusion of the work vehicle 10 outside the field to be displayed to enable the selection, on the registration confirmation screen D5 (see Fig. 10). For example, the setting processing unit 211 causes "collective setting" and "individual setting" to be displayed to enable the selection thereof, with respect to a protrusion setting for protrusion of the work vehicle 10 outside the field. The "collective setting" is a selection button for collectively setting, to the same content, whether to allow or not to allow part of the work vehicle 10 to protrude outside the field for all the outer edges of the field F. The "individual setting" is a selection button for setting whether to allow or not to allow part of the work vehicle 10 to protrude outside the field, for a specific location of the field F, and is, for example, a selection button for individually setting whether to allow or not to allow protrusion on a per-outer edge basis with respect to an outer edge (or boundary line corresponding to the outer edge in consideration of a safety margin) of the field F. For example, the operator presses a collective setting button K52 when the collective setting is made as to whether to allow/not to allow protrusion outside the field for all the outer edges, and presses an individual setting button K53 when individual setting is made as to whether to allow/not to allow protrusion outside the field on a per-outer edge basis.

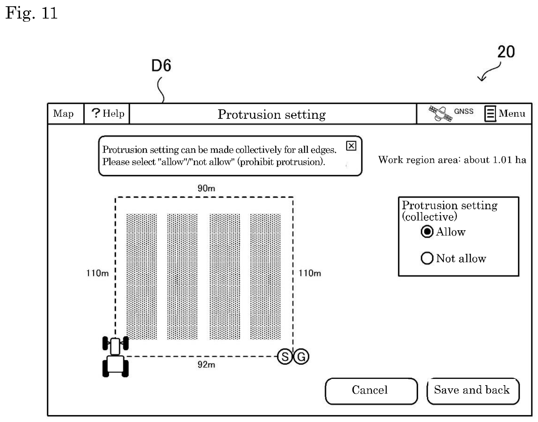

When the operator presses the collective setting button K52, the setting processing unit 211 causes a protrusion setting screen D6 shown in Fig. 11 to be displayed. The setting processing unit 211 causes selection as to whether to allow or not to allow the work vehicle 10 to protrude outside the field to be displayed to enable the selection, on the protrusion setting screen D6. The operator can collectively select whether to allow or not to allow the work vehicle 10 to protrude outside the field for all the outer edges of the field F. After the operator selects "allow" or "not allow", the operator presses a "save and back" button. When the operator selects "allow" and presses the "save and back" button, the setting processing unit 211 performs setting to allow the work vehicle 10 to protrude outside the field for all the outer edges of the field F. When the operator selects "not allow" and presses the "save and back" button, the setting processing unit 211 performs setting to prohibit the work vehicle 10 from protruding outside the field for all the outer edges of the field F.

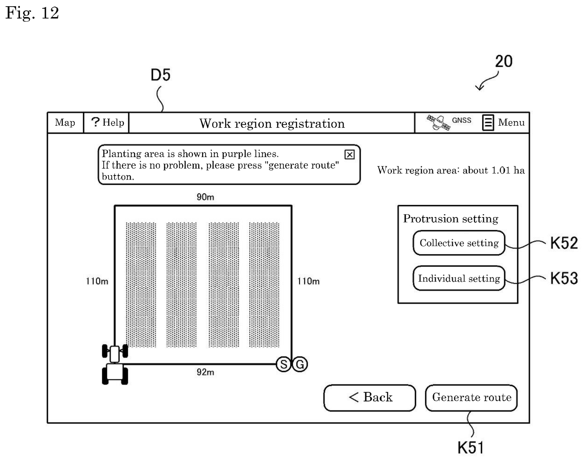

For example, when the operator selects "allow" and presses the "save and back" button, the setting processing unit 211 returns to the registration confirmation screen D5, and causes the outer edges of the field F to be displayed such that it is possible to distinguish the outer edges for which protrusion of the work vehicle 10 outside the field is allowed, as shown in Fig. 12. In Fig. 12, each outer edge is represented by a solid line. However, as another embodiment, the color of the outer edge may be displayed in a predetermined color. In a case where the operator determines that there is no problem with the set work range and protrusion setting, the operator presses the route generation button K51.

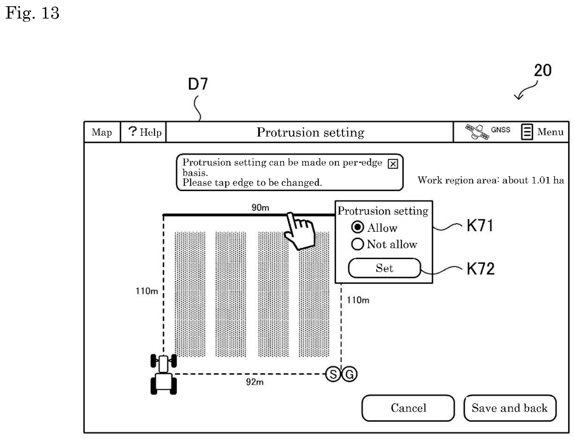

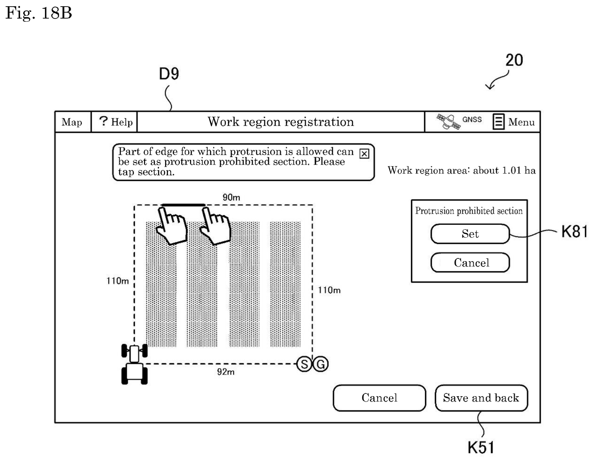

When the operator presses the individual setting button K53 (see Fig. 10), the setting processing unit 211 causes a protrusion setting screen D7 shown in Fig. 13 to be displayed. The setting processing unit 211 causes selection as to whether to allow or not to allow the work vehicle 10 to protrude outside the field to be displayed to enable the selection on a per-outer edge basis, on the protrusion setting screen D7. The operator can select an outer edge of the field F, and select whether to allow or not to allow the work vehicle 10 to protrude outside the field. For example, when the operator taps an outer edge (upper edge in Fig. 13) for which protrusion of the work vehicle 10 outside the field is allowed, the setting processing unit 211 causes a selection screen K71 for enabling selection as to whether to allow or not to allow protrusion outside the field from this outer edge to be displayed (displayed in a pop-up manner). After the operator selects "allow", the operator presses a setting button K72. If there is another outer edge for which protrusion of the work vehicle 10 outside the field is allowed, the operator sequentially taps the outer edge to select "allow" and presses the setting button K72. When the operator finishes the operation of the "allow" setting for each of the outer edges for which protrusion is allowed, the operator presses the "save and back" button. As a result, the setting processing unit 211 sets whether to allow or not to allow part of the work vehicle 10 to protrude outside the field on a per-outer edge basis with respect to an outer edge (an example of the specific location of the present invention) of the field F. As another embodiment, the setting processing unit 211 may set a range (for example, a selected range shown in Fig. 18B), in one edge, selected by the operator, as an allowed section for which protrusion outside the field is allowed.

When the operator makes a protrusion setting for each outer edge and presses the "save and back" button (see Fig. 13), the setting processing unit 211 returns to the registration confirmation screen D5, and causes the outer edge for which protrusion of the work vehicle 10 outside the field is allowed among the outer edges of the field F to be displayed in a distinguishable manner. For example, the setting processing unit 211 causes the outer edges to be displayed such that, among the outer edges of the field F, an outer edge for which protrusion is set to be allowed and an outer edge for which protrusion is set not to be allowed are displayed in different manners (for example, colors). In a case where the operator determines that there is no problem with the set work range and protrusion setting, the operator presses the route generation button K51.

Note that in the present embodiment, the setting processing unit 211 is configured to set "not allow" to an initial state and change the setting to "allow" in response to the operation of the operator, for the setting for protrusion outside the field. However, as another embodiment, the setting processing unit 211 may be configured to set "allow" to the initial state and change the setting to "not allow" in response to the operation of the operator, for the setting for protrusion outside the field.

Further, in a case where setting is made to allow part of the work vehicle 10 to protrude outside the field, the setting processing unit 211 sets an allowable protrusion amount (sticking-out limitation width), which is an upper limit value of a protrusion amount of the work vehicle 10. Specifically, the setting processing unit 211 sets the allowable protrusion amount, on the basis of the size of the work machine 14 or a detection result of a field boundary acquired when the work vehicle 10 has performed teaching travel at the time of field registration.

For example, when the field is registered, the operator rides on the work vehicle 10, and causes the work vehicle 10 to travel manually along an outer periphery, in a region of a work target. While the work vehicle 10 travels along the outer periphery, the setting processing unit 211 acquires position information on the work vehicle 10, and acquires a detection result of the periphery of the work vehicle 10 from a detection unit (obstacle sensor, camera, or the like) mounted on the work vehicle 10. For example, the detection unit detects a position and a height of an obstacle such as a levee or a structure near a boundary of a work region. On the basis of the detection result from the detection unit, the setting processing unit 211 calculates an upper limit value (allowable protrusion amount) of a length within which part of the work vehicle 10 can protrude outside the field without coming into contact with an obstacle.

For example, the setting processing unit 211 sets the allowable protrusion amount, on the basis of the size (length and width) of the work machine 14. For example, in the work vehicle 10 shown in Fig. 14A, when a rear (rear wheel) of the work vehicle 10 comes closest to a boundary of the field F, there is a possibility of protruding outside the field by a length L1 of the work machine 14. In this case, the maximum protrusion amount is the length L1. In addition, for example, when a side (wheel on a side) of the work vehicle 10 comes closest to a boundary of the field F, there is a possibility of protruding outside the field by a length of a portion protruding laterally toward a further side from the wheel on the side in a width W1 of the work machine 14. In this case, the maximum protrusion amount is this protrusion length.

In addition, for example, as shown in Fig. 14B, in the work vehicle 10 to which the work machine 14 is connected to be offset in a left-right direction, when a side (wheel on a side) of the work vehicle 10 comes closest to a boundary of the field F, there is a possibility of protruding outside the field by the width W1 of the work machine 14. In this case, the maximum protrusion amount is the width W1. As another embodiment, in a case where the work machine 14 is a sprayer, the maximum length of an arm extending to the side of the work vehicle 10 is the maximum protrusion amount.

In addition, for example, in the work vehicle 10 shown in each of Figs. 14A and 14B, when a front (front wheel) of the work vehicle 10 comes closest to a boundary of the field F, there is a possibility of protruding outside the field by a length of front part of the vehicle body, that is, a length of a portion in front of the front wheel. In this case, the maximum protrusion amount is the length of the portion in front of the front wheel.

As described above, the maximum value of the protrusion amount of the work vehicle 10 is a protrusion amount of a portion (the work machine 14 or the vehicle body) that protrudes outside the field when the work vehicle 10 travels on the outermost peripheral position (field boundary) of a travelable region of the field F. Note that in a case where a safety margin is provided on an inner side, by a predetermined distance, of an outer edge of the field F, the protrusion amount of the work vehicle 10 is a protrusion amount from a boundary line of a region excluding the safety margin.

The setting processing unit 211 sets the maximum protrusion amount as the allowable protrusion amount, in a case where the setting processing unit 211 determines, from the detection result from the detection unit, that contact with an obstacle will not occur even if part (portion) of the work vehicle 10 protrudes outside the field by the maximum protrusion amount. For example, in a case where the setting processing unit 211 determines that the work machine 14 will not come into contact with an obstacle even if the work machine 14 protrudes outside the field by a larger amount out of the length L1 and the width W1, the setting processing unit 211 sets the larger value out of the length L1 and the width W1 as the allowable protrusion amount. For example, in a case where there is no obstacle around the field F, the setting processing unit 211 sets a larger value out of the length L1 and the width W1 of the work machine 14 as the allowable protrusion amount.

On the other hand, in a case where the setting processing unit 211 determines that the work machine 14 will come into contact with an obstacle or the like when the work machine 14 protrudes outside the field by a larger amount out of the length L1 and the width W1, that is, in a case where a distance from an outer edge of the field F to the obstacle is shorter than the larger value out of the length L1 and the width W1 of the work machine 14, the setting processing unit 211 sets the distance to the obstacle as the allowable protrusion amount. Note that the length L1 and the width W1 of the work machine 14 may be registered in advance, on the registration screen of the "work machine registration" (see Fig. 5).

The setting processing unit 211 may set the allowable protrusion amount to the same value for all the outer edges for which the operator has allowed protrusion, or may set the allowable protrusion amount to different values for the respective outer edges. For example, in a case where there is no obstacle in the vicinity of each of all the outer edges for which the operator has allowed protrusion, the setting processing unit 211 sets the maximum protrusion amount as the allowable protrusion amount for all these outer edges. On the other hand, the setting processing unit 211 may set a distance to an obstacle as the allowable protrusion amount for an outer edge for which the obstacle exists among outer edges for which the operator has allowed protrusion, and may set the maximum protrusion amount as the allowable protrusion amount for an outer edge for which no obstacle exists. In addition, the setting processing unit 211 may set a distance to an obstacle as the allowable protrusion amount for a location where the obstacle exists on one edge of the outer edges, and may set the maximum protrusion amount as the allowable protrusion amount for a location where no obstacle exists on this one edge of the outer edges. That is, the setting processing unit 211 may set the allowable protrusion amount to different values, in one edge of the outer edges.

As described above, the setting processing unit 211 allows part of the work vehicle 10 to protrude outside the field for an outer edge of the field F in response to a selection operation of the operator, and sets the allowable protrusion amount for the outer edge for which the protrusion is set to be allowed. Note that the setting processing unit 211 may be able to receive a selection operation for the protrusion setting from the operator while the work vehicle 10 is actually traveling, or may be able to receive the selection operation before the work vehicle 10 starts traveling (for example, when a target route is generated).

### [Generation of target route]

The generation processing unit 212 generates a target route along which the work vehicle 10 is allowed to travel automatically on the field F, on the basis of the work information and the setting information. For example, when the operator presses the route generation button K51 on the registration confirmation screen D5 (see Figs. 10 and 12), the generation processing unit 212 generates a target route corresponding to each of the plurality of types of work included in the work plan. The generation processing unit 212 may collectively (all at once) generate a plurality of target routes corresponding to respective types of work of plowing, inversion, tilling, ridging, planting, weeding, pest control, and harvesting included in the crop cultivation plan. Note that the generation processing unit 212 generates the same target route for types of work sharing a common work machine 14 and a common work route (work range, work position), among the plurality of types of work.

In addition, the generation processing unit 212 generates a target route, on the basis of setting information on protrusion of the work vehicle 10 outside the field. For example, in a case where the protrusion of the work vehicle 10 outside the field is set to "not allow", the generation processing unit 212 generates a target route such that the work vehicle 10 does not protrude outside the field. On the other hand, in a case where the protrusion of the work vehicle 10 outside the field is set to "allow", the generation processing unit 212 generates a target route such that the protrusion amount of the work vehicle 10 outside the field is smaller than the allowable protrusion amount.

Here, the work vehicle 10 is more likely to protrude outside the field when traveling while turning in a headland (non-work region) on an outer peripheral side of the field F. Therefore, the generation processing unit 212 appropriately generates a turning route on which the work vehicle 10 does not protrude outside the field or a turning route for which the protrusion amount is smaller than the allowable protrusion amount.

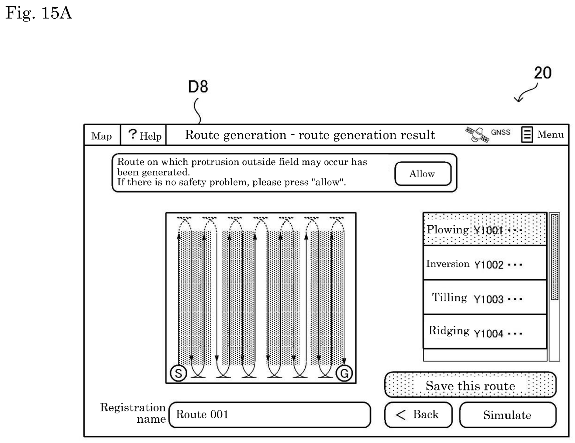

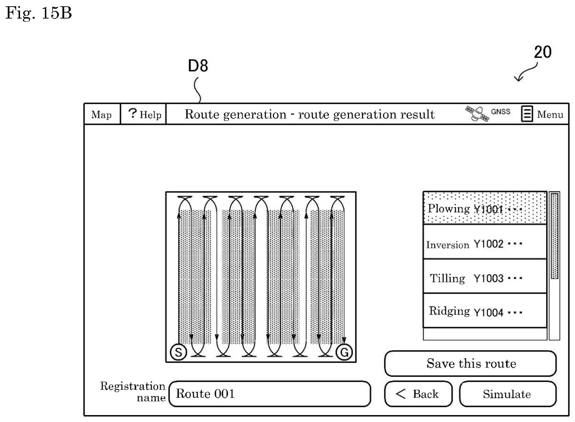

After the generation processing unit 212 generates the route as described above, the generation processing unit 212 causes a route generation result to be displayed. In addition, in a case where part of the work vehicle 10 will protrude outside the field on the generated route, when protrusion outside the field is set to "allow", the generation processing unit 212 causes a message indicating that a route on which protrusion outside the field may occur has been generated to be displayed, and causes a "allow" button for approving the protrusion outside the field to be displayed, on a route generation result screen D8, as shown in Fig. 15A. In addition, the generation processing unit 212 may cause a portion, of the target route, on which protrusion outside the field may occur to be displayed in a distinguishable manner, on the route generation result screen D8. When the operator presses the "allow" button, the generation processing unit 212 updates the route generation result screen D8 to the screen shown in Fig. 15B to enable a selection operation on a save button. When the operator presses a "save this route" button, the generation processing unit 212 registers the target route in association with the field.

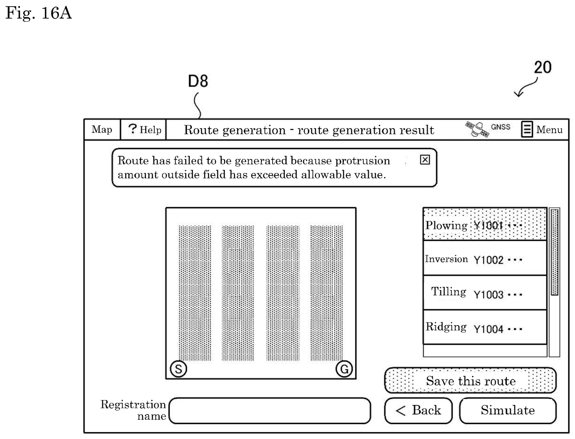

In addition, in a case where protrusion outside the field is set to "allow" and the protrusion amount outside the field exceeds the allowable protrusion amount, on the generated route (in the case of a route generation error), the generation processing unit 212 may cause an error screen to be displayed, on the route generation result screen D8, as shown in Fig. 16A. In this case, the generation processing unit 212 causes a message indicating that the route has failed to be generated to be displayed on the route generation result screen D8, and omits the display of the generated route.

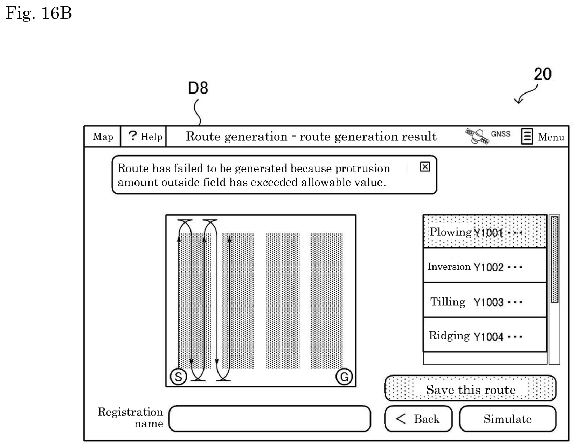

As another embodiment, in the case of the route generation error, the generation processing unit 212 may cause only a route of a portion for which the protrusion amount outside the field does not exceed the allowable protrusion amount to be displayed, on the route generation result screen D8, as shown in Fig. 16B. In addition, in the case of the route generation error, the generation processing unit 212 may cause countermeasure information used for resolving the error to be displayed. For example, the generation processing unit 212 may prompt a change in a headland width, present an optimal headland width, prompt a change in the allowable protrusion amount, or present an optimal allowable protrusion amount, as the countermeasure information. Specifically, for example, when the route generation error occurs in a turning route generated with a turning pattern according to conditions ("only forward movement" and "turning radius: 5 m") set by the operator, the generation processing unit 212 gradually changes the turning radius from 5 m to 3 m, and when the route generation error is unable to be resolved even in this change, the generation processing unit 212 generates a turning route by changing the condition to "including backward movement", and when the route generation error is unable to be resolved even in this change, the generation processing unit 212 generates a turning route by further changing the turning radius. In addition, the generation processing unit 212 may generate a target route by changing conditions and finally present a route for which the route generation error is resolved to the operator.

In addition, in the case of the route generation error, the generation processing unit 212 may present the respective minimum values to which the headland width and the allowable protrusion amount can be reduced. For example, in work with a cropping type, there is a case in which the work area does not increase even if the headland width is increased due to a relationship of a fraction. In this case, the generation processing unit 212 may present to the operator the maximum value to which the headland width can be increased. In addition, in a case where the allowable protrusion amount is set to be larger and it is desired to reduce the protrusion amount as much as possible, the generation processing unit 212 may present to the operator the minimum value to which the allowable protrusion amount can be reduced.

Note that, in a case where protrusion outside the field is set to "not allow", when a route on which protrusion outside the field may occur has been generated, similarly, the generation processing unit 212 may cause the error screen to be displayed as the route generation error.

When the generation processing unit 212 generates a plurality of target routes corresponding to respective types of work of plowing, inversion, tilling, ridging, planting, weeding, pest control, and harvesting included in the work plan (crop cultivation plan), the generation processing unit 212 registers the target routes in association with the work plan. In this manner, the generation processing unit 212 collectively generates a plurality of target routes corresponding to a plurality of respective types of work, in accordance with the work plan. The operator can easily confirm the work plan with the work plan list D21, and can easily confirm the target routes corresponding to the respective types of work. For example, in a case where the operator selects predetermined work in the work plan list D21 (see Fig. 7), the control unit 21 may cause a target route corresponding to this work to be displayed. As a result, the operator can easily confirm the target routes for the respective types of work.

Here, when the operator causes work to start, the operator selects a field, selects the work (work plan), confirms a target route, and then provides a work start instruction. When the operator provides the work start instruction, the output processing unit 213 outputs route data of a target route generated by the generation processing unit 212 to the work vehicle 10. Specifically, the output processing unit 213 outputs route data of the target route R1 to the work vehicle 10a, and outputs route data of the target route R2 to the work vehicle 10b.

When the route data generated in the operation terminal 20 is transferred to each of the work vehicles 10, the work vehicle 10 stores the route data in the storage unit 12. Each of the work vehicles 10 performs automatic travel processing on the basis of the route data while detecting the current position of the work vehicle 10 by using the positioning antenna 164. Specifically, the vehicle control device 11 of each of the work vehicles 10 causes the work vehicle 10 to travel automatically in accordance with setting content related to protrusion of the work vehicle 10 outside the field.

While each of the work vehicles 10 is traveling automatically, the operator can grasp a travel state, a work status, and the like in the field F with the operation terminal 20.

Note that the operation terminal 20 may be able to access a website (agricultural support site) of an agricultural support service provided by a server via the communication network N1. In this case, the operation terminal 20 can function as an operation terminal for the server, by causing an operation control unit to execute a browser program. In this case, the server includes the processing units described above and performs each piece of processing.

### [Setting processing]

An example of the setting processing performed by the control unit 21 of the operation terminal 20 will be described below with reference to Fig. 17. For example, the setting processing is started by the control unit 21 when the control unit 21 receives a setting operation for generating a target route of the work vehicle 10 from the operator.

Note that the present invention may be regarded as an invention for a setting method (an example of the setting method of the present invention) in which part or all of the setting processing is performed by the control unit 21, or an invention for a setting program (an example of the setting program of the present invention) for causing the control unit 21 to perform part or all of the setting method. In addition, the setting processing may be performed by one or more processors.

### <Step S1>

In Step S1, the control unit 21 performs work registration. For example, when the operator presses the work addition button K21 on the registration screen D2 of Fig. 6 and selects a work machine in accordance with a work plan from a plurality of work machines registered in advance, and then when the operator performs an operation of registering work information such as a work area, a work method for a headland, driverless travel/human-operated travel, a turning method, a vehicle speed, and an engine rotation speed, the control unit 21 registers the work information in association with the work. The control unit 21 registers work information on each of a plurality of types of work included in the work plan, on the basis of the registration operation of the operator. For example, when the operator performs an operation of registering work information on each type of work of plowing, inversion, tilling, ridging, planting, weeding, pest control, and harvesting in order to create a crop cultivation plan, the control unit 21 registers the work information on each type of work in association with the crop cultivation plan.

### <Step S2>

Next, in Step S2, the control unit 21 causes the work plan (work plan list D21) including the work information on the plurality of types of registered work to be displayed. For example, as shown in Fig. 7, the control unit 21 causes the operation and display unit 23 to display the work plan list D21 of the crop cultivation plan.

### <Step S3>

Next, in Step S3, the control unit 21 causes a registration screen for pieces of setting information to be displayed. Specifically, the operator selects "route generation" on the menu screen D1 (see Fig. 5), selects a work plan (here, "crop cultivation plan") on the route generation screen D3 (see Fig. 8), and performs selection of a field, designation of a work region, setting of a work direction, setting of a work start position and a work end position, setting of work content (for example, pest control paths, ridge spacing, the number of ridges, and the like), and the like on the registration screen (not shown). After each piece of setting information is registered, the control unit 21 causes the registration confirmation screen D5 (see Fig. 10) to be displayed.

### <Step S4>

Next, in Step S4, the control unit 21 determines whether or not a setting operation related to protrusion of the work vehicle 10 outside the field has been received from the operator. Specifically, in a case where the operator selects "collective setting" or "individual setting" on the registration confirmation screen D5 (S4: Yes), the control unit 21 causes the processing to proceed to Step S5. On the other hand, in a case where the operator presses the route generation button K51 on the registration confirmation screen D5 (S4: No), the control unit 21 causes the processing to proceed to Step S6.

### <Step S5>

In Step S5, the control unit 21 performs processing related to protrusion setting. Specifically, when the operator presses the collective setting button K52 (see Fig. 10), the control unit 21 causes the protrusion setting screen D6 shown in Fig. 11 to be displayed, and causes selection as to whether to allow or not to allow the work vehicle 10 to protrude outside the field to be displayed to enable the selection for all the outer edges of the field F. For example, when the operator selects "allow" and presses the "save and back" button, the control unit 21 performs setting to allow the work vehicle 10 to protrude outside the field for all the outer edges of the field F. In addition, when the operator selects "not allow" and presses the "save and back" button, the control unit 21 performs setting to prohibit the work vehicle 10 from protruding outside the field for all the outer edges of the field F.

In addition, when the operator presses the individual setting button K53 (see Fig. 10), the control unit 21 causes the protrusion setting screen D7 shown in Fig. 13 to be displayed, and causes selection as to whether to allow or not to allow the work vehicle 10 to protrude outside the field to be displayed to enable the selection on a per-outer edge basis. For example, when the operator taps an outer edge (upper edge in Fig. 13) for which protrusion of the work vehicle 10 outside the field is allowed, the control unit 21 causes the selection screen K71 for enabling selection as to whether to allow or not to allow protrusion outside the field from this outer edge to be displayed (displayed in a pop-up manner). The operator sets "allow" for each of the outer edges for which protrusion is allowed, and presses the "save and back" button. In this manner, the control unit 21 sets whether to allow or prohibit protrusion of the work vehicle 10 outside the field on a per-outer edge basis with respect to an outer edge of the field F. When the protrusion setting is ended, the control unit 21 causes the processing to proceed to Step S6.

### <Step S6>

In Step S6, the control unit 21 determines whether or not an instruction to generate a target route has been received from the operator. When the instruction to generate the target route has been received from the operator (S6: Yes), the control unit 21 causes the processing to proceed to Step S7. For example, when the operator presses the route generation button K51 on the registration confirmation screen D5 (see Figs. 10 and 12), the control unit 21 causes the processing to proceed to Step S7. The control unit 21 repeats the processing of Steps S4 and S5 until the operator presses the route generation button K51 on the registration confirmation screen D5 (S6: No).

### <Step S7>

In Step S7, the control unit 21 generates a target route corresponding to each of the plurality of types of work included in the work plan. Here, the control unit 21 collectively generates a plurality of target routes corresponding to respective types of work of plowing, inversion, tilling, ridging, planting, weeding, pest control, and harvesting included in the crop cultivation plan.

In addition, the control unit 21 generates the target route on the basis of the allowable protrusion amount, when a setting is made to allow the work vehicle 10 to protrude outside the field. Specifically, the control unit 21 generates the target route within a range in which the protrusion amount of the work vehicle 10 outside the field does not exceed the allowable protrusion amount. For example, the control unit 21 generates a turning route as appropriate such that the protrusion amount does not exceed the allowable protrusion amount.

Note that even when a setting to prohibit the work vehicle 10 from protruding outside the field is made, the control unit 21 may select the optimum turning pattern to generate the turning route.

### <Step S8>

In Step S8, the control unit 21 causes the generated route to be displayed on the route generation result screen D8 (see Figs. 15A and 15B).

In a case where part of the work vehicle 10 will protrude outside the field on the generated route, and in a case where protrusion outside the field is set to "allow", the control unit 21 causes the message indicating that a route on which protrusion outside the field may occur has been generated to be displayed and causes the "allow" button for approving the protrusion outside the field to be displayed, on the route generation result screen D8, as shown in Fig. 15A, and further causes a portion where the protrusion outside the field may occur to be displayed in a distinguishable manner.

In addition, in a case where protrusion outside the field is set to "allow", and in a case where the protrusion amount outside the field exceeds the allowable protrusion amount (in the case of the route generation error), the control unit 21 causes the error screen to be displayed, on the route generation result screen D8, as shown in Fig. 16A. In addition, the control unit 21 may cause only a route of a portion for which the protrusion amount outside the field does not exceed the allowable protrusion amount to be displayed, as shown in Fig. 16B.

When the operator presses the "allow" button on the screen shown in Fig. 15A and the operator presses the "save this route" button on the screen shown in Fig. 15B, the control unit 21 registers the target route in association with the field. When the operator presses the "back" button on the route generation result screen D8 shown in Fig. 16A, the control unit 21 may cause a screen for changing a headland width and the allowable protrusion amount to be displayed, and receive an operation for changing the headland width and the allowable protrusion amount.

### <Step S9>

In Step S9, the control unit 21 determines whether or not a work start instruction has been received from the operator. When the work start instruction has been received from the operator (S9: Yes), the control unit 21 causes the processing to proceed to Step S10. The control unit 21 waits until the work start instruction is received (S9: No).

### <Step S10>

In Step S10, the control unit 21 outputs route data of the generated target route to the work vehicle 10. For example, the control unit 21 outputs route data of a target route generated for the entire field F to each of the work vehicles 10 that performs a corresponding one of plowing work and inversion work, outputs route data of a target route generated for work blocks to each of the work vehicles 10 that performs a corresponding one of tilling work, ridging work, planting work, weeding work, and harvesting work, and outputs route data of a target route generated for pest control paths to a work vehicle 10 that performs pest control work. Each of the work vehicles 10 travels automatically along the target route, at a timing set in advance for a corresponding one of types of work of plowing, inversion, tilling, ridging, planting, weeding, pest control, and harvesting.

As described above, the automatic travel system 1 according to the present embodiment sets information used for causing the work vehicle 10 to travel automatically on the field F. Specifically, the automatic travel system 1 can set whether or not to allow part of the work vehicle 10 to protrude outside the field when the work vehicle 10 travels automatically on the field F. For example, the automatic travel system 1 can set whether or not to allow part of the work vehicle 10 to protrude outside the field, for a specific location of an end part of the field F such as an outer edge of the field F or a boundary line of a region excluding a safety margin in the field F. In addition, the automatic travel system 1 can set whether or not to allow part of the work vehicle 10 to protrude outside the field, for a plurality of outer edges of the field F. In addition, the automatic travel system 1 causes the work vehicle 10 to travel automatically in accordance with setting content related to protrusion of the work vehicle 10 outside the field.

According to the above configuration, it is possible to perform setting for protrusion of the work vehicle 10 outside the field, in accordance with a state of the field F, a state of an obstacle around the field F, and the like, such as allowing the work vehicle 10 to protrude outside the field for the entire field F, or allowing the work vehicle 10 to protrude outside the field only for a specific location (for example, one edge of the outer edges) of the field F. Therefore, it is possible to improve work efficiency of work performed by the work vehicle 10.

### [Other embodiments]

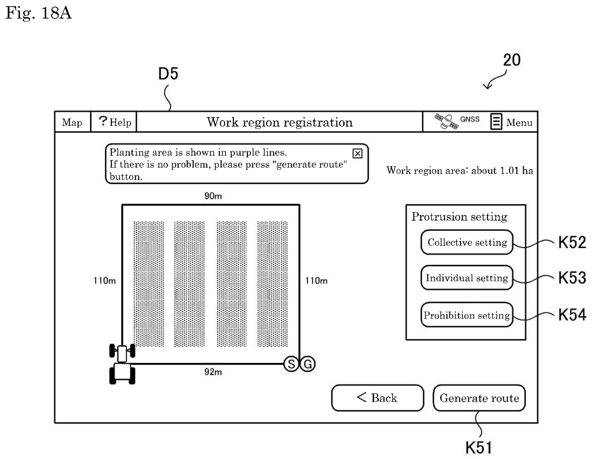

The present invention is not limited to the embodiments described above, and may include the following embodiments. For example, the setting processing unit 211 may be capable of prohibiting part of the work vehicle 10 from protruding outside the field, for a specific region on an outer edge for which the part of the work vehicle 10 is allowed to protrude outside the field. Fig. 18A shows a state in which protrusion of the work vehicle 10 outside the field is allowed for each of the outer edges of the field F. On the registration confirmation screen D5 shown in Fig. 18A, the setting processing unit 211 causes a prohibition setting button K54 for prohibiting protrusion outside the field to be displayed. When the operator presses the prohibition setting button K54, the setting processing unit 211 causes a prohibition setting screen D9 shown in Fig. 18B to be displayed, and receives an operation of setting a section from which protrusion outside the field is prohibited. For example, on the prohibition setting screen D9, when the operator selects (taps) two points on an outer edge for which protrusion outside the field is allowed and presses a setting button K81, the setting processing unit 211 sets a section between the two points as a prohibited section, (an example of the specific region of the present invention), for which protrusion outside the field is prohibited.

As another embodiment, the setting processing unit 211 may set, as the prohibited section, a region, in the field, whose range is designated by the operator. For example, in a case where the operator designates a range of an entrance, a discharge position, a replenishment position, or the like of the field F, the setting processing unit 211 may prohibit protrusion (entry) to the region whose range has been designated.

In a case where the prohibited section is set, the generation processing unit 212 generates a target route (such as a turning route) such that the work vehicle 10 does not protrude outside the field in the prohibited section. In addition, the operator may be able to set the allowable protrusion amount for the prohibited section. For example, in a case where the operator selects (taps) two points of an outer edge, the setting processing unit 211 may cause a setting screen for the allowable protrusion amount corresponding to the prohibited section to be displayed, and receive an input operation on the allowable protrusion amount from the operator.

As another embodiment, in a case where the operator selects (taps) two points on a desired outer edge, the setting processing unit 211 may set a section between the two points as an allowed section for which protrusion outside the field is allowed. For example, in a case where, on the protrusion setting screen D7 shown in Fig. 13, the operator taps an outer edge (upper edge), subsequently selects (taps) two points on the upper edge, selects "allow", and presses the setting button K72, the setting processing unit 211 sets a section between the two points as the allowed section.

In the embodiment described above, the setting processing unit 211 sets whether or not to allow part of the work vehicle 10 to protrude outside the field, in response to the operation of the operator (see Figs. 10 to 13 and the like). As another embodiment, the setting processing unit 211 may automatically set whether or not to allow part of the work vehicle 10 to protrude outside the field, independent of the operation of the operator. For example, the setting processing unit 211 determines whether or not the work vehicle 10 can protrude outside the field, and a possible protrusion amount, on the basis of a detection result (a position and a height of an obstacle such as a levee or a structure near a boundary of a work region, or the like) acquired from the detection unit (obstacle sensor, camera, or the like) and a state of the work vehicle 10 (a height of the work machine 14 from the ground surface at a non-work time or at the time of turning travel, or a height from the ground surface to the vehicle body). Then, the setting processing unit 211 sets whether to allow/not to allow protrusion outside the field on the basis of the determination result. In addition, the setting processing unit 211 may automatically set whether to allow/not to allow protrusion outside the field, on the basis of the determination result, for each of the outer edges, for example.

Further, in a case where selection as to whether to allow/not to allow protrusion outside the field is automatically set, the setting processing unit 211 may cause locations to be displayed in a distinguishable manner on the registration confirmation screen D5 (see Fig. 10 and the like), where the locations include a location from which protrusion outside the field is allowed and a location from which protrusion outside the field is prohibited.

Further, the setting processing unit 211 may set, on the basis of the height of an obstacle, a height on the basis of which protrusion outside the field is allowed. For example, in a case where an obstacle exists in a spatial area from the ground surface to a height H0, the setting processing unit 211 sets the height H0 or higher as an allowable protrusion height, for an outer edge for the position of the obstacle. In this case, the setting processing unit 211 allows protrusion outside the field in a case where a height H1 of the work machine 14 or the vehicle body from the ground surface is higher than the height H0, and prohibits protrusion outside the field in a case where the height H1 is lower than the height H0. The setting processing unit 211 may set the allowable protrusion height for each of outer edges for which respective obstacles exist, or may set the allowable protrusion height for each of locations (positions) at which respective obstacles exist.

Further, the setting processing unit 211 may set whether to allow/not to allow protrusion outside the field, on the basis of information such as a work record and a travel history for other work included in the work plan, and a detection result from the detection unit at the time when the work is performed.

Further, as another embodiment of the present invention, the setting processing unit 211 may be able to set whether or not to allow part of the work vehicle 10 to protrude outside the field, for a non-work route in a specific location among non-work routes in the headland. For example, in a case where there is a non-work route for which it is determined that part of the work vehicle 10 will protrude outside the field in a specific location (for example, one edge of the outer edges) when the work vehicle 10 is about to travel, the setting processing unit 211 may collectively set whether to allow/not to allow protrusion outside the field for a plurality of non-work routes corresponding to the specific location, or may individually set whether to allow/not to allow protrusion for the plurality of non-work routes corresponding to the specific location.

Further, as another embodiment of the present invention, the setting processing unit 211 may set whether or not to allow part of the work vehicle 10 to protrude outside the field, on the basis of information related to the work machine 14 attached to the work vehicle 10. For example, among the work machines 14, there are some work machines 14 for which protrusion outside the field is not allowable, such as a work machine towed by the work vehicle 10. Therefore, the setting processing unit 211 may set whether or not to allow protrusion outside the field, in accordance with the type of the work machine 14.

Further, as another embodiment of the present invention, the setting processing unit 211 may set whether or not to allow part of the work vehicle 10 to protrude outside the field, for each portion of the work vehicle 10. For example, the setting processing unit 211 may allow front part (front portion) of the work vehicle 10 to protrude outside the field, and prohibit rear part (rear portion) of the work vehicle 10 from protruding outside the field. In this manner, it is possible to select whether or not to allow protrusion for each portion of the work vehicle 10, and thus it is possible to consider safety while improving work performance.

Further, as another embodiment of the present invention, the setting processing unit 211 may set a vehicle speed at a time when the work vehicle 10 is caused to travel in a region where the work vehicle 10 is allowed to protrude outside the field, to a vehicle speed lower than a vehicle speed at a time when the work vehicle 10 travels without protruding outside the field.

Further, as another embodiment of the present invention, in a case where the work vehicle 10 travels while being allowed to protrude outside the field, automatic travel may be allowed on condition that the operator is performing monitoring (a state is obtained in which the work vehicle 10 can be stopped at any time, such as a state in which the operator rides on the work vehicle 10 or a state in which the operator monitors a monitor).

Further, as another embodiment of the present invention, the setting processing unit 211 may perform setting to narrow the work range A1 inside the field F, in a case where protrusion of the work vehicle 10 outside the field is not allowed.

Further, as another embodiment of the present invention, the setting processing unit 211 may allow displaying of an allowable protrusion amount, which is an upper limit value of a protrusion amount allowed when the work vehicle 10 protrudes outside the field, and a headland width. In addition, the operator may be able to change the allowable protrusion amount and the headland width. In a case where the operator has changed the allowable protrusion amount and the headland width, the generation processing unit 212 may generate a target route on the basis of the allowable protrusion amount and the headland width subjected to the change.

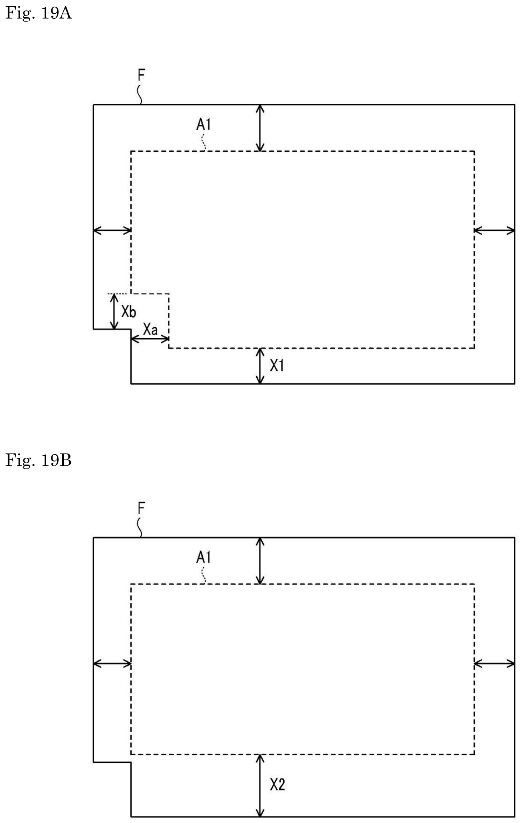

Further, in a case where the allowable protrusion amount and the headland width are changed, the setting processing unit 211 may change the size and shape of the work range A1 in the field F. For example, as shown in Fig. 19A, in a case where a corner (lower left corner in the drawing) of the field F has a shape recessed toward the inside, the setting processing unit 211 sets the shape of the work range A1 to match the outer shape. Here, with the setting processing unit 211, a headland width Xa is set in the left-right direction in the drawing from an outer edge of the corner, and a headland width Xb is set in the upper-lower direction in the drawing from an outer edge of the corner. Here, in a case where the operator increases a headland width for a lower edge of the field F from X1 to X2, the setting processing unit 211 changes the size and shape of the work range A1, as shown in Fig. 19B. For example, when the headland width increases to a position where the lower edge of the work range A1 is no longer in contact with an outer edge of the field F, the setting processing unit 211 changes a corner (lower left corner) of the work range A1 to a simplified shape as shown in Fig. 19B. With this change, the headland widths Xa, Xb are omitted. Note that when the operator decreases the headland width from X2 to X1 in the state shown in Fig. 19B, the setting processing unit 211 changes the corner (lower left corner) of the work range A1 to the shape shown in Fig. 19A. In this manner, the setting processing unit 211 may change the size and shape of the work range A1 in accordance with change in a headland width.

A setting system according to the present invention may include the operation terminal 20 alone, may include the work vehicle 10 and the operation terminal 20, or may include the work vehicle 10 alone. Alternatively, the setting system may include a server including the processing units included in the operation terminal 20.

### [Additional notes of invention]

Outlines of the invention extracted from the embodiments will be additionally described below. Note that configurations and processing functions, described in the following additional notes, can be selected and freely combined.

### <Additional note 1>

A setting method for setting information used for causing a work vehicle to travel automatically on a field, the setting method including:
setting whether or not to allow part of the work vehicle to protrude outside the field when the work vehicle travels automatically on the field.

### <Additional note 2>

The setting method according to additional note 1, in which the setting whether or not to allow the part of the work vehicle to protrude outside the field is performed for a specific location of an end part of the field.

### <Additional note 3>

The setting method according to additional note 1 or 2, in which the setting whether or not to allow the part of the work vehicle to protrude outside the field is performed for a plurality of outer edges of the field.

### <Additional note 4>

The setting method according to additional note 3, in which the part of the work vehicle is prohibited from protruding outside the field, for a specific region on an outer edge, of the plurality of outer edges, for which the part of the work vehicle is allowed to protrude outside the field.

### <Additional note 5>

The setting method according to additional note 2, in which
a target route along which the work vehicle is allowed to travel automatically includes a work route along which the work vehicle is allowed to travel automatically while performing predetermined work and a non-work route along which the work vehicle is allowed to travel automatically without performing the predetermined work, and
the setting whether or not to allow the part of the work vehicle to protrude outside the field is performed for the non-work route in the specific location.

### <Additional note 6>

The setting method according to any one of additional notes 1 to 5, in which the setting whether or not to allow the part of the work vehicle to protrude outside the field is performed based on information related to a work machine attached to the work vehicle.

### <Additional note 7>

The setting method according to any one of additional notes 1 to 6, in which the setting whether or not to allow the part of the work vehicle to protrude outside the field is performed for each portion of the work vehicle.

### <Additional note 8>

The setting method according to any one of additional notes 1 to 7, in which an allowable protrusion amount is set based on a size of a work machine attached to the work vehicle or a detection result of a field boundary acquired when the work vehicle has performed teaching travel at a time of field registration, in a case where the part of the work vehicle is allowed to protrude outside the field, the allowable protrusion amount being an upper limit value of a protrusion amount of the work vehicle.

### <Additional note 9>

The setting method according to additional note 8, in which a target route along which the work vehicle is allowed to travel automatically is generated based on the allowable protrusion amount.

### <Additional note 10>

The setting method according to additional note 9, in which a turning pattern of a turning route included in the target route is determined based on the allowable protrusion amount.

### <Additional note 11>

A setting program for setting information used for causing a work vehicle to travel automatically on a field, the setting program being configured to cause one or more processors to perform: setting whether or not to allow part of the work vehicle to protrude outside the field when the work vehicle travels automatically on the field.

<Additional note 12>

A setting system for setting information used for causing a work vehicle to travel automatically on a field, the setting system being configured to set whether or not to allow part of the work vehicle to protrude outside the field when the work vehicle travels automatically on the field.

### <Additional note 13>

An automatic travel method for causing a work vehicle to travel automatically on a field, the automatic travel method including:
setting whether or not to allow part of the work vehicle to perform protrusion outside the field when the work vehicle travels automatically on the field; and
causing the work vehicle to travel automatically in accordance with setting content related to the protrusion of the work vehicle outside the field.

### LIST OF REFERENCE SIGNS

- 1: Automatic travel system
- 10: Work vehicle
- 11: Vehicle control device
- 12: Storage unit
- 13: Travel device
- 14: Work machine
- 15: Communication unit
- 16: Positioning unit
- 18: Cabin
- 20: Operation terminal
- 21: Control unit
- 22: Storage unit
- 23: Operation and display unit
- 24: Communication unit
- 211: Setting processing unit
- 212: Generation processing unit
- 213: Output processing unit

## Claims

1. A setting method for setting information used for causing a work vehicle to travel automatically on a field, the setting method comprising:
setting whether or not to allow part of the work vehicle to protrude outside the field when the work vehicle travels automatically on the field.

2. The setting method according to claim 1, wherein the setting whether or not to allow the part of the work vehicle to protrude outside the field is performed for a specific location of an end part of the field.

3. The setting method according to claim 1, wherein the setting whether or not to allow the part of the work vehicle to protrude outside the field is performed for a plurality of outer edges of the field.

4. The setting method according to claim 3, wherein the part of the work vehicle is prohibited from protruding outside the field, for a specific region on an outer edge, of the plurality of outer edges, for which the part of the work vehicle is allowed to protrude outside the field.

5. The setting method according to claim 2, wherein
a target route along which the work vehicle is allowed to travel automatically includes a work route along which the work vehicle is allowed to travel automatically while performing predetermined work and a non-work route along which the work vehicle is allowed to travel automatically without performing the predetermined work, and
the setting whether or not to allow the part of the work vehicle to protrude outside the field is performed for the non-work route in the specific location.

6. The setting method according to claim 1, wherein the setting whether or not to allow the part of the work vehicle to protrude outside the field is performed based on information related to a work machine attached to the work vehicle.

7. The setting method according to claim 1, wherein the setting whether or not to allow the part of the work vehicle to protrude outside the field is performed for each portion of the work vehicle.

8. The setting method according to claim 1, wherein an allowable protrusion amount is set based on a size of a work machine attached to the work vehicle or a detection result of a field boundary acquired when the work vehicle has performed teaching travel at a time of field registration, in a case where the part of the work vehicle is allowed to protrude outside the field, the allowable protrusion amount being an upper limit value of a protrusion amount of the work vehicle.

9. The setting method according to claim 8, wherein a target route along which the work vehicle is allowed to travel automatically is generated based on the allowable protrusion amount.

10. The setting method according to claim 9, wherein a turning pattern of a turning route included in the target route is determined based on the allowable protrusion amount.

11. A setting program for setting information used for causing a work vehicle to travel automatically on a field, the setting program being configured to cause one or more processors to perform: setting whether or not to allow part of the work vehicle to protrude outside the field when the work vehicle travels automatically on the field.

12. A setting system for setting information used for causing a work vehicle to travel automatically on a field, the setting system being configured to set whether or not to allow part of the work vehicle to protrude outside the field when the work vehicle travels automatically on the field.

13. An automatic travel method for causing a work vehicle to travel automatically on a field, the automatic travel method comprising:
setting whether or not to allow part of the work vehicle to perform protrusion outside the field when the work vehicle travels automatically on the field; and
causing the work vehicle to travel automatically in accordance with setting content related to the protrusion of the work vehicle outside the field.
